# EUROPEAN PATENT APPLICATION

(11) **EP 3 336 654 A1**
(43) Date of publication of application: **20.06.2018**
(21) Application number: 17000169.7
(22) Date of filing: 02.02.2017
(51) Int. Cl.: G06F 1/16

(54) **PORTABLE ELECTRONIC DEVICE ASSEMBLED WITH REPLACEABLE EXTERNAL MODULE**

(30) Priority: 14.12.2016 TW 105219037 U; 06.01.2017 TW 106200264 U
(71) Applicant: iRUGGY Systems Co., Ltd., Taipei City 114 (TW)
(72) Inventor: CHANG, Tsung-Chu, Taipei City 114 (TW)
(74) Representative: Zeitler Volpert Kandlbinder Patent- und Rechtsanwälte Partnerschaft mbB

(57) **Abstract**

A portable electronic device is assembled with a replaceable external module. The portable electronic device includes at least two expansion slots. Each of the expansion slots includes an accommodation space and a first electric connection means. The accommodation space is defined by plural sidewalls. The first electric connection means is installed on one of the plural sidewalls of the accommodation space. The external module is received in the accommodation space of at least one of the at least two expansion slots and located adjacent to the plural sidewalls of the accommodation space. The first electric connection means of the at least one of the at least two expansion slots is electrically connected with at least one second electric connection means of the external module. The external module is replaceably assembled with the portable electronic device through the expansion slots.

## Description

### FIELD OF THE INVENTION

The present invention relates to a portable electronic device, and more particularly to a portable electronic device assembled with a replaceable external module.

### BACKGROUND OF THE INVENTION

Nowadays, the applications of portable electronic devices on business selling systems are gradually extensive. For example, the host of a point-of-sale (POS) system can be carried and used easily because of small volume and light weightiness.

However, the applications of the conventional portable electronic devices are still limited. For example, all of the equipped modules of the portable electronic device are predetermined and installed by the original factory, and these equipped modules cannot be replaced and assembled by the user. If new functions are needed, the user has to purchase another portable electronic device including the function modules with the new functions. In other words, the conventional technology wastes resources.

Moreover, if some fixed modules of the portable electronic device are damaged, the entire of the portable electronic device has to be discarded and replaced with a new one or the portable electronic device has to be sent to the original factory for repair. Since the damaged modules cannot be flexibly replaced with new ones, the conventional portable electronic device is not friendly and convenient to the user of the store.

For example, a portable electronic device is a portable ordering device equipped with a fixed printing module. If the business concept of the store is changed and the function of paying for the food while ordering is required, the user of the store has to discard the old portable ordering device and purchase a new portable ordering device with the payment module. Under this circumstance, the operating cost of the store is increased and the problem of wasting resources is generated. Moreover, the conventional portable electronic device cannot meet the diversification and multifunction requirements.

Therefore, there is a need of providing a portable electronic device with a novel and flexible matching structure in order to overcome the drawbacks of the conventional technology.

### SUMMARY OF THE INVENTION

An object of the present invention provides a portable electronic device that can be assembled with a replaceable external module. A protrusion structure of the external module and an accommodation space of an expansion slot of the portable electronic device are fittingly coupled and electrically connected with each other. Consequently, the external module can be replaced with a new one, and the new external module can be assembled with the portable electronic device.

In accordance with an aspect of the present invention, there is provided a portable electronic device that is assembled with a replaceable external module. The portable electronic device includes at least two expansion slots. Each of the expansion slots includes an accommodation space and a first electric connection means. The accommodation space is used for receiving an external module. The accommodation space is defined by plural sidewalls. The first electric connection means is installed on one of the plural sidewalls of the accommodation space. The external module is received in the accommodation space of at least one of the at least two expansion slots and located adjacent to the plural sidewalls of the accommodation space. The first electric connection means of the at least one of the at least two expansion slots is electrically connected with at least one second electric connection means of the external module.

In an embodiment, the external module is a single external module including a single second electric connection means, and the external module is received in the at least two accommodation spaces of the at least two expansion slots.

In an embodiment, the single external module includes at least two protrusion structures, and the at least two protrusion structures are received in the at least two accommodation spaces, respectively. The single second electric connection means is installed in one of the at least two protrusion structures.

In an embodiment, the external module is a single external module including at least two second electric connection means. The at least two second electric connection means are electrically connected with the corresponding first electric connection means of the at least two expansion slots in response to a power transmission demand.

In an embodiment, the single external module includes at least two protrusion structures, and the at least two protrusion structures are received in the at least two accommodation spaces, respectively. The at least two second electric connection means are respectively installed in the at least two protrusion structures.

In an embodiment, the external module is a single external module including a single second electric connection means, and the external module includes a single protrusion structure. The single protrusion structure is received in one of the at least two accommodation spaces, and the single second electric connection means is installed in the single protrusion structure.

In an embodiment, the first electric connection means and the second electric connection means are electric connectors, and the electric connectors are contact type electric connectors or plug-in type electric connectors.

In an embodiment, the contact type electric connectors are an assembly of electric contacts and probes, or the plug-in type electric connectors are an assembly of male/female electric connectors.

In an embodiment, the assembly of male/female electric connectors includes universal serial bus (USB) connectors or micro universal serial bus (Micro USB) connectors.

In an embodiment, the portable electronic device further includes a power unit, and the power unit is electrically connected with a microprocessor. The first electric connection means and the second electric connection means are electrically connected with each other, so that the power unit provides electric power to the external module.

In an embodiment, the first electric connection means further includes a detecting terminal, and the detecting terminal generates a detection signal when the detecting terminal is electrically connected with the external module. The microprocessor controls the power unit to actively provide the electric power to the external module in response to the detection signal.

In an embodiment, the external module is a payment module, a scanning module, an identification module, a wireless transmission module, a communication module, a printing module or a combination thereof.

In an embodiment, the portable electronic device is a mobile device, a tablet computer or a host of a point-of-sale (POS) system.

In an embodiment, the portable electronic device further includes at least one movable cover. The accommodation space of the expansion slot that is not assembled with the external module is covered by the at least one movable cover.

In accordance with another aspect of the present invention, there is provided a portable electronic device that is assembled with a replaceable external module. The at least two expansion slots is arranged side by side. Each of the expansion slots includes an accommodation space and a first electric connection means. The first electric connection means is installed in the accommodation space. A first external module or a second external module is replaceably assembled with the at least two expansion slots. The first external module includes at least one second electric connection means and is received in the accommodation space of one of the at least two expansion slots, so that the second electric connection means is electrically connected with the first electric connection means of one of the at least two expansion slots. Alternatively, the second external module includes at least one second electric connection means and is received in the at least two accommodation spaces of the at least two expansion slots, so that the at least one second electric connection means is electrically connected with the first electric connection means of at least one of the at least two expansion slots.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 is a schematic block diagram illustrating the architecture of a portable electronic device according to an embodiment of the present invention;
FIG. 2A is a schematic perspective view illustrating a first example of the portable electronic device of FIG. 1;
FIG. 2B is a schematic exploded view of the portable electronic device as shown in FIG. 2A;
FIG. 2C is a schematic enlarged fragmentary view illustrating the expansion slots of the portable electronic device as shown in FIG. 2B;
FIG. 3 is a schematic perspective view illustrating a second example of the portable electronic device of FIG. 1; and
FIG. 4 is a schematic perspective view illustrating a third example of the portable electronic device of FIG. 1.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. In the following embodiments and drawings, the elements irrelevant to the concepts of the present invention are omitted and not shown.

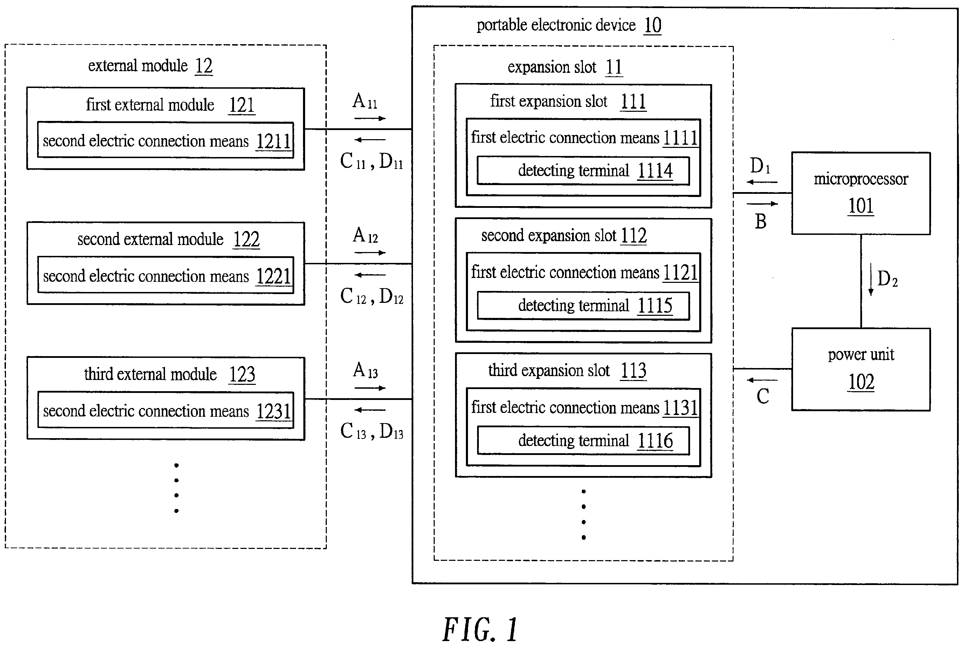

FIG. 1 is a schematic block diagram illustrating the architecture of a portable electronic device according to an embodiment of the present invention. As shown in FIG. 1, the portable electronic device 10 comprises a microprocessor 101, a power unit 102 and plural expansion slots 11. Moreover, plural external modules 12 to be coupled with the plural expansion slots 11 are also shown. In this embodiment, the plural expansion slots comprise three expansion slots 111, 112 and 113. The first expansion slot 111 comprises a first electric connection means 1111 and a detecting terminal 1114. The second expansion slot 112 comprises a first electric connection means 1121 and a detecting terminal 1115. The third expansion slot 113 comprises a first electric connection means 1131 and a detecting terminal 1116.

The detecting terminals 1114-1116 are installed in the first electric connection means 1111~1131. The first electric connection means 1111~1131 are coupled with the corresponding external modules 12. The detecting terminals 1114-1116 are used for detecting external signals A11, A12 and A13 from the corresponding external modules 12. In this embodiment, the portable electronic device 10 that is coupled with the external modules 12 is a host of a point-of-sale (POS) system. Another example of the portable electronic device includes but is not limited to a mobile device or a tablet computer.

In this embodiment, the external modules 12 at least comprise a first external module 121, a second external module 122 and a third external module 123. For example, the first external module 121 is a payment module, the second external module 122 is a scanning module, and the third external module 123 is an identification module. The external modules 121, 122 and 123 comprises second electric connection means 1211, 1221 and 1231, respectively. The second electric connection means 1211, 1221 and 1231 are electrically connected with the first electric connection means 1111, 1121 and 1131, respectively. It is noted that the examples of the external modules 12 are not restricted. For example, the external modules include a wireless transmission module, a communication module and a printing module. That is, the examples of the external modules 12 can be determined according to the practical requirements.

The connecting relationships between the above components and the operations of these components will be described as follows.

When the second electric connection means 1211, 1221 or 1231 of any external module 12 (e.g., the payment module 121, the scanning module 122 or the identification module 123) is electrically connected with the corresponding first electric connection means 1111, 1121 or 1131 of the corresponding expansion slot 111, 112 or 113, the detecting terminal 1114, 1115 or 1116 in the first electric connection means 1111, 1121 or 1131 generates at least one corresponding detection signal B to the microprocessor 101 in response to the at least one external signal A11~A13.

After the microprocessor 101 receives the detection signal B, the microprocessor 101 generates the corresponding signals D1 and D2 to the corresponding external module 12. The driving signal D11, D12 or D13 of the driving signal D1 is transmitted to the corresponding external module 121, 122 or 123 through the corresponding expansion slot 111, 112 or 113. The microprocessor 101 issues the driving signal D2 to control the power unit 102 to output electric power C. The electric power C11, C12 or C13 of the electric power C is transmitted to the corresponding external module 121, 122 or 123 through the corresponding expansion slot 111, 112 or 113.

That is, the driving signals D11, D12 and D13 are used to drive the external module 121, 122 and 123, respectively. The driving signal D2 is used for driving the power unit 102 to provide electric power C11, C12 and C13 to the external module 121, 122 and 123, respectively. In other words, the microprocessor 101 can actively provide the required driving interfaces and electric power to the external modules 12 according to the system demand of the external modules 12.

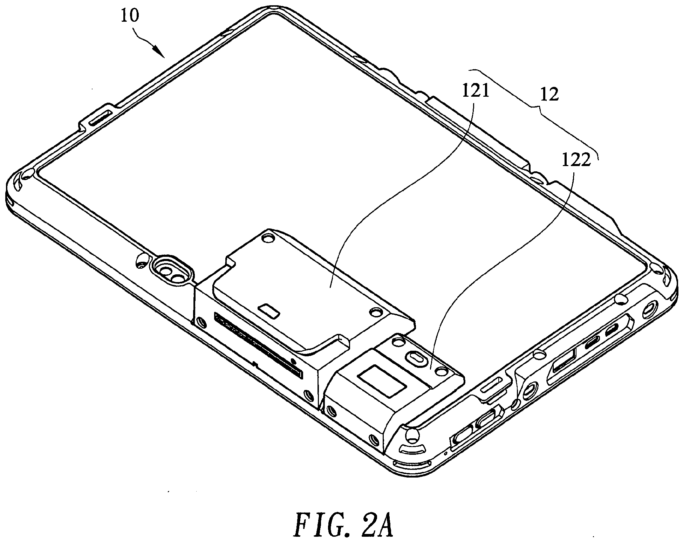

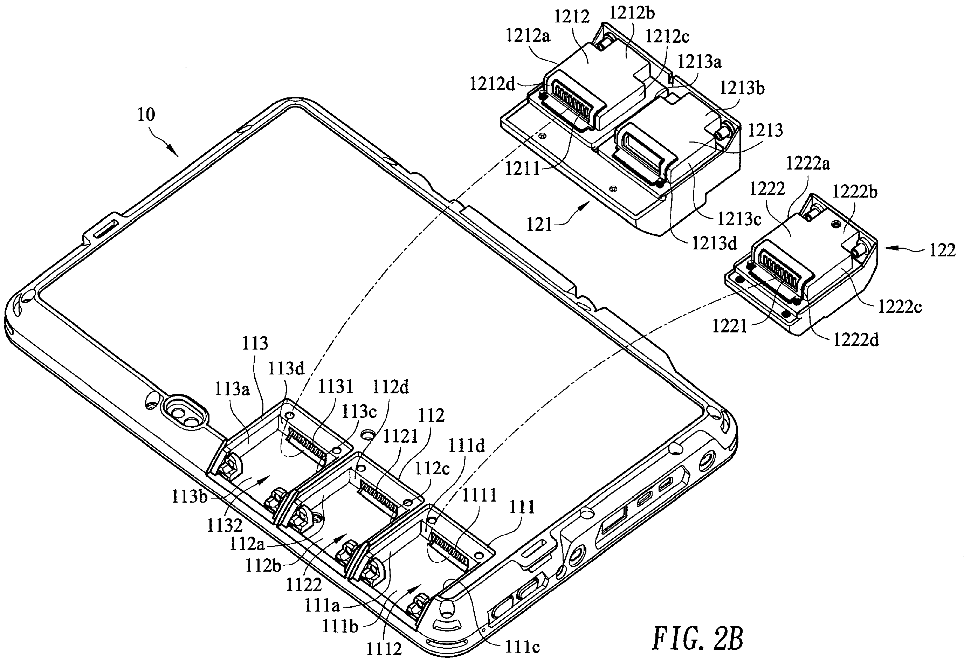

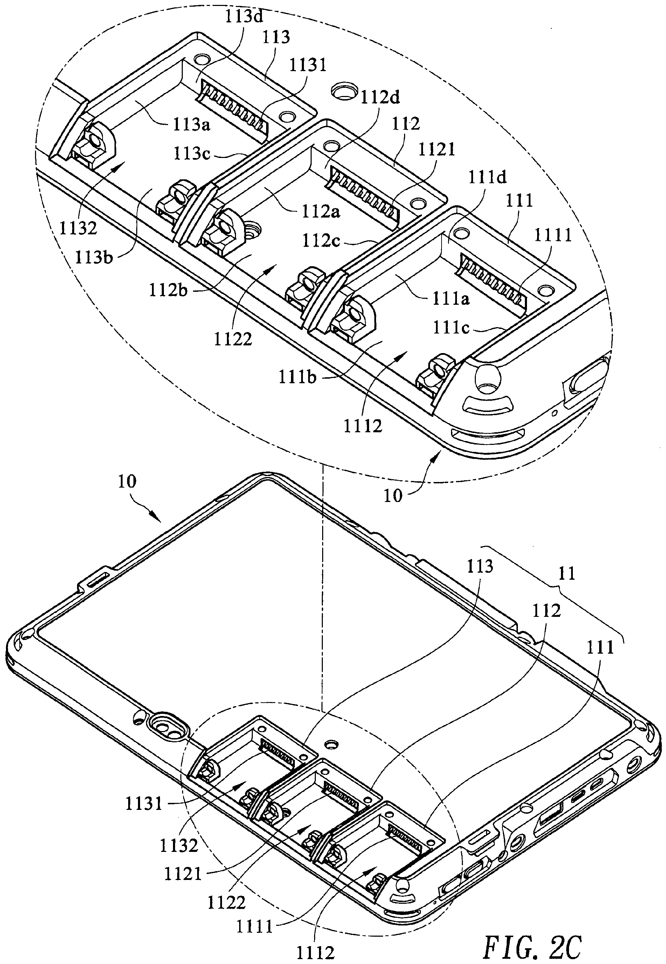

Please refer to FIGS. 2A, 2B and 2C. FIG. 2A is a schematic perspective view illustrating a first example of the portable electronic device of FIG. 1. FIG. 2B is a schematic exploded view of the portable electronic device as shown in FIG. 2A. FIG. 2C is a schematic enlarged fragmentary view illustrating the expansion slots of the portable electronic device as shown in FIG. 2B.

As shown in FIGS. 2A, 2B and 2C, the portable electronic device 10 comprises the microprocessor 101, the power unit 102 and the plural expansion slots 11. In addition, the plural external modules 12 are coupled with the corresponding expansion slots 11. In the embodiment of FIGS. 2A, 2B and 2C, the portable electronic device 10 comprises three expansion slots 111, 112 and 113. Moreover, the expansion slots 111, 112 and 113 comprise accommodation spaces 1112, 1122 and 1132, respectively.

The accommodation space 1112 is defined by plural sidewalls 111a~111d. The accommodation space 1122 is defined by plural sidewalls 112a~112d. The accommodation space 1132 is defined by plural sidewalls 113a~113d. The first electric connection means 1111 is installed on any of the sidewalls 111a~111d. The first electric connection means 1121 is installed on any of the sidewalls 112a~112d. The first electric connection means 1131 is installed on any of the sidewalls 113a~113d. The first electric connection means 1111~1131 are coupled with the corresponding external modules 12. Moreover, the first electric connection means 1111~1131 receive the external signals A11 ~ A13 through the detecting terminals 1114~1116. In this embodiment, the portable electronic device 10 coupled with the external modules 12 is a host of a point-of-sale (POS). For example, the portable electronic device 10 is a portable ordering device.

In another embodiment, the portable electronic device is a mobile device or a tablet computer. In this embodiment, the external modules for the portable electronic device 10 include the payment module 121 and the scanning module 122.

In case that the external module is the scanning module 122, the external module a single external module with a single second electric connection means. The accommodation space 1112 of the first expansion slot 111 is defined by plural sidewalls 111a~111d, and the first electric connection means 1111 is installed on the sidewall 111 d. The scanning module 122 further comprises a protrusion structure 1222. The protrusion structure 1222 comprises plural sidewalls 1222a~1222d. The second electric connection means 1221 is disposed within the protrusion structure 1222. Moreover, the second electric connection means 1221 is adjacent to and protruded from the sidewall 1222d.

Please refer to FIGS. 2A, 2B and 2C again. When the scanning module 122 is coupled with the first expansion slot 111, the protrusion structure 1222 of the scanning module 122 is received in the accommodation space 1112 of the first expansion slot 111. Moreover, the sidewalls 1222a~1222d of the protrusion structure 1222 match the sidewalls 111a~111d of the accommodation space 1112, respectively. Under this circumstance, the first electric connection means 1111 on the sidewall 111d and the second electric connection means 1221 on the sidewall 1222d of the protrusion structure 1222 of the scanning module 122 are electrically connected with each other.

In an embodiment, the first electric connection means and the second electric connection means are electric connectors such as contact type electric connectors or plug-in type electric connectors. For example, the contact type electric connectors are the assembly of electric contacts and probes, and the plug-in type electric connectors are the assembly of male/female electric connectors. In this embodiment, the first electric connection means 1111 and the second electric connection means 1221 are universal serial bus (USB) connectors or micro universal serial bus (Micro USB) connectors that are the assembly of male/female electric connectors.

In case that the external module is the payment module 121, the external module a single external module with a single second electric connection means. Moreover, the payment module 121 is received in the accommodation spaces of two expansion slots.

In this embodiment, the payment module 121 comprises two protrusion structures 1212 and 1213. The protrusion structure 1212 comprises plural sidewalls 1212a~1212d. The protrusion structure 1213 comprises plural sidewalls 1213a~1213d. The single second electric connection means 1211 is disposed within one of the two protrusion structures 1212 and 1213. For example, the single second electric connection means 1211 is disposed within the protrusion structure 1212. Moreover, the single second electric connection means 1211 is located adjacent to and protruded from the sidewall 1212d.

Please refer to FIGS. 2A, 2B and 2C again. When the payment module 121 is coupled with the second expansion slot 112 and the third expansion slot 113, the two protrusion structures 1212 and 1213 of the payment module 121 are received in the accommodation spaces 1122 and 1132 of the two expansion slots 112 and 113. Moreover, the sidewalls 1212a~1212d and 1213a~1213d of the two protrusion structures 1212 and 1213 match the sidewalls 112a~112d and 113a~113d of the two accommodation spaces 1122 and 1132, respectively. Under this circumstance, the first electric connection means 1131 on the sidewall 113d and the second electric connection means 1211 on the sidewall 1212d of the protrusion structure 1212 of the payment module 121 are electrically connected with each other. Consequently, the payment module 121 is fittingly placed into the two expansion slots 112 and 113 and electrically connected with the portable electronic device 10.

Moreover, in response to a power transmission demand, the external module comprises plural second electric connection means. For example, in response to the power transmission demand, the payment module 121 is a single external module comprises two second electric connection means (not shown). The two second electric connection means are disposed within the two protrusion structures 1212 and 1213. Moreover, the two second electric connection means are located adjacent to and protruded from the sidewalls 1212d and 1213d of the two protrusion structures 1212 and 1213.

When the payment module 121 is placed into the two expansion slots 112 and 113, the two protrusion structures 1212 and 1213 are fittingly received in the accommodation spaces 1122 and 1132. Under this circumstance, the two second electric connection means 1211 on the sidewalls 1212d and 1213d and the two first electric connection means 1131 on the sidewalls 112d and 113d are electrically connected with each other (not shown). Consequently, the portable electronic device 10 provides electric power to the payment module 121 through the two expansion slots 112 and 113.

It is noted that numerous modifications and alterations may be made while retaining the teachings of the invention. For example, the number of the expansion slots of the portable electronic device may be varied according to the practical requirements. Moreover, the protrusion structure of the external module and the accommodation space of the expansion slot are correspondingly modified according to the practical requirements. Due to the protrusion structure and the accommodation space, the external module is fittingly coupled with and electrically connected with the expansion slot. That is, various structures capable of achieving the above function are included within the scope of the appended claims of the present invention.

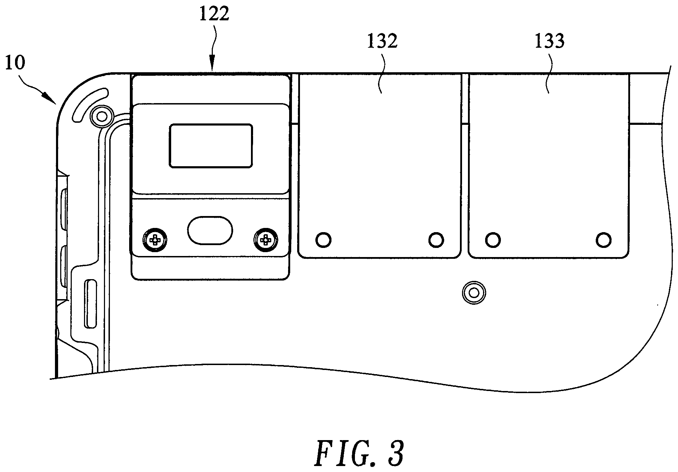

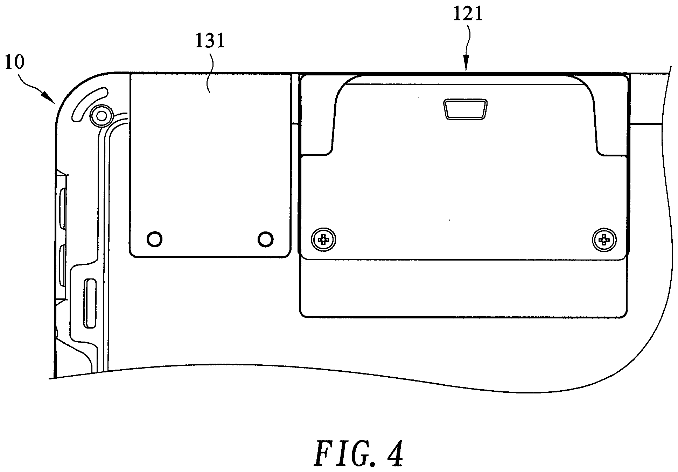

FIG. 3 is a schematic perspective view illustrating a second example of the portable electronic device of FIG. 1. FIG. 4 is a schematic perspective view illustrating a third example of the portable electronic device of FIG. 1.

As shown in FIG. 3, the portable electronic device 10 further comprises two movable covers 132 and 133. The scanning module 122 is received in the first expansion slot 111. The expansion slots 112 and 113 that are not assembled with the external modules 12 are covered and coupled with the two movable covers 132 and 133. As shown in FIG. 4, the portable electronic device 10 further comprises a movable cover 131. The payment module 121 is received in the two expansion slots 112 and 113. The expansion slot 111 is covered and coupled with the movable cover 131. Consequently, the portable electronic device 10 is assembled.

From the above descriptions, the accommodation spaces of the expansion slots of the portable electronic device match the corresponding protrusion structures of the external modules. Consequently, the protrusion structures are fittingly received in the corresponding accommodation spaces. Moreover, the first electric connection means of the expansion slot and the second electric connection means of the external module are electrically connected with each other. Consequently, according to the practical requirements, the external module with a desired function and a proper size (or volume) is flexibly selected to be assembled with the portable electronic device. In other words, the portable electronic device of the present invention is user-friendly because external module can be replaced easily.

While the invention has been described in terms of what is presently considered to be the most practical and preferred embodiments, it is to be understood that the invention needs not be limited to the disclosed embodiments. On the contrary, it is intended to cover various modifications and similar arrangements included within the spirit and scope of the appended claims which are to be accorded with the broadest interpretation so as to encompass all such modifications and similar structures.

## Claims

1. A portable electronic device (10) assembled with a replaceable external module, the portable electronic device (10) comprising at least two expansion slots (111, 112, 113), **characterized in that** each of the expansion slots (111, 112, 113) comprises an accommodation space (1112, 1122, 1132) for receiving an external module (12, 121, 122, 123) and a first electric connection means (1111, 1121, 1131), the accommodation space (1112, 1122, 1132) is defined by plural sidewalls (111a~111d, 112a~112d, 113a~113d), and the first electric connection means (1111, 1121, 1131) is installed on one of the plural sidewalls (111a~111d, 112a~112d, 113a~113d) of the accommodation space(1112, 1122, 1132), wherein the external module (12, 121, 122, 123) is received in the accommodation space (1112, 1122, 1132) of at least one of the at least two expansion slots (111, 112, 113) and located adjacent to the plural sidewalls (111a~111d, 112a~112d, 113a~113d) of the accommodation space (1112, 1122, 1132), and the first electric connection means (1111, 1121, 1131) of the at least one of the at least two expansion slots (111, 112, 113) is electrically connected with at least one second electric connection means (1211, 1221, 1231) of the external module (12, 121, 122, 123).

2. The portable electronic device (10) according to claim 1, wherein the external module (12, 121, 122, 123) is a single external module comprising a single second electric connection means (1211, 1221, 1231), and the external module (12, 121, 122, 123) is received in the at least two accommodation spaces (1112, 1122, 1132) of the at least two expansion slots (111, 112, 113).

3. The portable electronic device (10) according to claim 2, wherein the single external module (12, 121, 122, 123) comprises at least two protrusion structures (1212, 1213, 1222), and the at least two protrusion structures (1212, 1213, 1222) are received in the at least two accommodation spaces (1112, 1122, 1132), respectively, wherein the single second electric connection means (1211, 1221, 1231) is installed in one of the at least two protrusion structures (1212, 1213, 1222).

4. The portable electronic device (10) according to claim 1, wherein the external module (12, 121, 122, 123) is a single external module comprising at least two second electric connection means (1211, 1221, 1231), wherein the at least two second electric connection means (1211, 1221, 1231) are electrically connected with the corresponding first electric connection means (1111, 1121, 1131) of the at least two expansion slots (111, 112, 113) in response to a power transmission demand.

5. The portable electronic device (10) according to claim 4, wherein the single external module (12, 121, 122, 123) comprises at least two protrusion structures (1212, 1213, 1222), and the at least two protrusion structures (1212, 1213, 1222) are received in the at least two accommodation spaces (1112, 1122, 1132), respectively, wherein the at least two second electric connection means (1211, 1221, 1231) are respectively installed in the at least two protrusion structures (1212, 1213, 1222).

6. The portable electronic device (10) according to claim 1, wherein the external module (12, 121, 122, 123) is a single external module comprising a single second electric connection means (1211, 1221, 1231), and the external module (12, 121, 122, 123) comprises a single protrusion structure (1212, 1213, 1222), wherein the single protrusion structure (1212, 1213, 1222) is received in one of the at least two accommodation spaces (1112, 1122, 1132), and the single second electric connection means (1211, 1221, 1231) is installed in the single protrusion structure (1212, 1213, 1222).

7. The portable electronic device (10) according to claim 1, wherein the first electric connection means (1111, 1121, 1131) and the second electric connection means (1211, 1221, 1231) are electric connectors, and the electric connectors are contact type electric connectors or plug-in type electric connectors.

8. The portable electronic device (10) according to claim 7, wherein the contact type electric connectors are an assembly of electric contacts and probes, or the plug-in type electric connectors are an assembly of male/female electric connectors.

9. The portable electronic device (10) according to claim 8, wherein the assembly of male/female electric connectors includes universal serial bus (USB) connectors or micro universal serial bus (Micro USB) connectors.

10. The portable electronic device (10) according to claim 1, wherein the portable electronic device (10) further comprises a power unit, and the power unit is electrically connected with a microprocessor (101), wherein the first electric connection means (1111, 1121, 1131) and the second electric connection means (1211, 1221, 1231) are electrically connected with each other, so that the power unit provides electric power to the external module (12, 121, 122, 123).

11. The portable electronic device (10) according to claim 10, wherein the first electric connection means (1111, 1121, 1131) further comprises a detecting terminal (1114, 1115, 1116), and the detecting terminal (1114, 1115, 1116) generates a detection signal when the detecting terminal (1114, 1115, 1116) is electrically connected with the external module (12, 121, 122, 123), wherein the microprocessor (101) controls the power unit to actively provide the electric power to the external module (12, 121, 122, 123) in response to the detection signal.

12. The portable electronic device (10) according to claim 1, wherein the external module (12, 121, 122, 123) is a payment module, a scanning module, an identification module, a wireless transmission module, a communication module, a printing module or a combination thereof.

13. The portable electronic device (10) according to claim 1, wherein the portable electronic device (10) is a mobile device, a tablet computer or a host of a point-of-sale (POS) system.

14. The portable electronic device (10) according to claim 1, further comprising at least one movable cover, wherein the accommodation space (1112, 1122, 1132) of the expansion slot (111, 112, 113) that is not assembled with the external module (12, 121, 122, 123) is covered by the at least one movable cover.

15. A portable electronic device (10) assembled with a replaceable external module, the portable electronic device (10) comprising at least two expansion slots (111, 112, 113), the at least two expansion slots (111, 112, 113) being arranged side by side, **characterized in that** each of the expansion slots (111, 112, 113) comprises an accommodation space (1112, 1122, 1132) and a first electric connection means (1111, 1121, 1131) installed in the accommodation space (1112, 1122, 1132), wherein a first external module (12, 121, 122, 123) or a second external module (12, 121, 122, 123) is replaceably assembled with the at least two expansion slots (111, 112, 113), wherein the first external module (12, 121, 122, 123) comprises at least one second electric connection means (1211, 1221, 1231) and is received in the accommodation space (1112, 1122, 1132) of one of the at least two expansion slots (111, 112, 113), so that the second electric connection means (1211, 1221, 1231) is electrically connected with the first electric connection means (1111, 1121, 1131) of one of the at least two expansion slots (111, 112, 113), or the second external module (12, 121, 122, 123) comprises at least one second electric connection means (1211, 1221, 1231) and is received in the at least two accommodation spaces (1112, 1122, 1132) of the at least two expansion slots (111, 112, 113), so that the at least one second electric connection means (1211, 1221, 1231) is electrically connected with the first electric connection means (1111, 1121, 1131) of at least one of the at least two expansion slots (111, 112, 113).
